# EUROPEAN PATENT SPECIFICATION

(11) **EP 2 532 010 B1**
(45) Date of publication and mention of the grant of the patent: **28.10.2020**
(21) Application number: 10703180.9
(22) Date of filing: 03.02.2010
(51) Int. Cl.: B82Y 30/00, H01B 3/40

(54) **ELECTRICAL INSULATION SYSTEM**
ELEKTRISCHES ISOLIERUNGSSYSTEM
SYSTEME D'ISOLATION ELECTRIQUE

(43) Date of publication of application: 12.12.2012
(73) Proprietor: ABB Schweiz AG, 5400 Baden (CH)
(72) Inventor: KORNMANN, Xavier, 79787 Lauchringen (DE); SCHMIDT, Lars, E., SE- Oskarshamn 57232 (SE); KRIVDA, Andrej, CH-5430 Wettingen (CH); GREUTER, Felix, CH-5406 Baden-Rütihof (CH); CARLEN, Martin, CH-5443 Niederrohrdorf (CH)
(74) Representative: Zimmermann & Partner Patentanwälte mbB
(86) International application number: PCT/EP2010/051298
(87) International publication number: WO 2011/095208

(56) References cited:
- EP-A1- 1 038 913
- WO-A1-2006/008422
- DE-A1- 1 915 350
- US-A1- 2007 221 939
- US-A1- 2008 166 157
- DATABASE CAPLUS [Online] CHEMICAL ABSTRACTS SERVICE, COLUMBUS, OHIO, US; 10 February 2006 (2006-02-10), HIRAOKA, MOTOKI ET AL HIRAOKA, MOTOKI ET AL: "Silica slurry compositions, their varnish compositions with high silica content, and electrically insulating films and prepregs comprising them Silica slurry compositions, their varnish compositions with high silica content, and electrically insulating films and prepregs comprising them", XP002611456, retrieved from STN Database accession no. 2006:122383 -& JP 2006 036916 A (ADMATECHS CO LTD) 9 February 2006 (2006-02-09)
- DATABASE CA [Online] CHEMICAL ABSTRACTS SERVICE, COLUMBUS, OHIO, US; 10 January 2008 (2008-01-10), XP002611458, retrieved from STN Database accession no. 2008:32229 -& CHEN, Q.;BOOTHROYD, T.; TAN, G.H., SUTANTO, N., SOUTAR, A., ZENG, X.T.: "Silica Coating of Nanoparticles by the Sonogel Process", LANGMUIR, vol. 24, no. 3, 2008, pages 650-653, XP002611459, Retrieved from the Internet: URL:http://pubs.acs.org/doi/pdfplus/10.102 1/la703872k> [retrieved on 2010-11-25]
- DATABASE CA [Online] CHEMICAL ABSTRACTS SERVICE, COLUMBUS, OHIO, US; 7 April 2008 (2008-04-07), XP002616281, retrieved from STN Database accession no. 2008:428537 -& WANG, YAOJUN; WANG, YANQIN; LIU, XIAOHUI; LU, GUANZHONG: "Synthesis and morphology of functionalized mesoporous ethanesilica", STUDIES IN SURFACE SCIENCE AND CATALYSIS , 165(RECENT PROGRESS IN MESOSTRUCTURED MATERIALS), 447-450 CODEN: SSCTDM; ISSN: 0167-2991 STUDIES IN SURFACE SCIENCE AND CATALYSIS (RECENT PROGRESS IN MESOSTRUCTURED MATERIALS), vol. 165, 2007, pages 447-450, XP009141584,
- SUN Y ET AL: "Study and Characterization on the Nanocomposite Underfill for Flip Chip Applications", IEEE TRANSACTIONS ON COMPONENTS AND PACKAGING TECHNOLOGIES, IEEE SERVICE CENTER, PISCATAWAY, NJ, US, vol. 29, no. 1, 1 March 2006 (2006-03-01), pages 190-197, XP001546817, ISSN: 1521-3331, DOI: DOI:10.1109/TCAPT.2006

## Description

The present invention refers to an electrical insulation system with improved electrical breakdown strength.

Electrical insulations, for instance in embedded poles, instrument and distribution transformers or sensors, generally consist of an epoxy resin cured with an acid anhydride in the presence of an accelerator. The starting components usually are mixed together with a filler material, for example with silica flower, typically in the range of 60 to 65 % by weight of filler material, calculated to the total weight of the electrical insulator composition; the mixture is then cured. Alternative polymers can also be used such as polyesters, polyamides, polybutylene terephthalate, polyurethanes or polydicyclopentadiene. A large amount of filler generally decreases the overall price of the insulation, however, it also increases the stiffness, the fracture toughness, the thermal conductivity of the insulator and decreases its thermal expansion coefficient.

Cracking in epoxy based insulation is a recurrent problem in such electrical insulators. Increase of toughness is clearly beneficial to improve this situation. In electrical machine insulations, increasing simultaneously the glass transition temperature and the toughness of the resin generally, leads to an increase of the thermal class of the insulation, which means that the electrical machines can be run at higher current ratings.

A key property for the reliability of an electrical insulation material is that it has a high electrical breakdown strength and, therewith, good insulating properties also at high electrical field strengths. WO 2006/008422 proposes the production of an electrical insulator for high voltage use comprising a mineral filler material wherein the mineral filler material is a combination of a filler material with an average grain size distribution within the micron-scale together with a selected filler material with an average grain size distribution within the nano-scale, i.e. less than 1 µm. However, such a combination, especially for industrial potting applications, e.g. with epoxy resins, has the disadvantage that it increases the viscosity of the curable epoxy resin composition and therewith reduces its processability. It further often is difficult to incorporate the nano sized filler material homogenously within the curable electrical insulation composition.

In the production of an electrical insulator for high voltage use generally a mineral filler material is used having an average grain size distribution within the range of 1 µm-500 µm, preferably within the range of 5 µm-100 µm.

It has now surprisingly been found that nano-scale sized filler materials, such as nano-scale sized silica, i.e. a filler material having an average grain size distribution within the nano-scale, when produced by a sol-gel process, can be added to the curable electrical insulation composition or to a single component thereof, using simple mixing methods, thereby providing an excellent dispersion of the nano-particles within the curable electrical insulation composition. It has been found that this is true for nano-scale sized filler materials when produced by a sol-gel process, wherein said nano-scale sized filler material is selected from the group comprising silica, zinc oxide, alumina, aluminum trihydrate (ATH), layered silicates, titanium dioxide, metal nitrides and metal carbides.

The addition of such nano-scale sized filler materials is significantly improving the electrical properties of the insulator system, especially its electrical breakdown strength. A curable electrical epoxy resin composition containing about five parts by weight of nano-scale sized filler material produced by a sol-gel process such as nano-scale sized silica, and about 55 parts by weight of conventional micro-scale sized filler material having an average grain size distribution within the micro-scale such as conventional micro-scale sized silica, yields a cured electrical isolator composition with an improved dielectric breakdown strength by up to 50% compared to the cured electrical isolator composition containing 60 parts by weight of micro-scale sized filler only, such as micro-scale sized powdered silica.

This rather unique simultaneous increase of these different properties at low nanofiller content is highly beneficial for the development of more robust insulation systems. This effect is most likely due to the extremely good dispersion of the nanofiller as produced by a sol-gel process in the cured epoxy resin composition. Moreover, the solution presents the additional advantage when the nanofiller can be added to the hardenable epoxy resin composition or to a component thereof in the form of a masterbatch, said nanofiller masterbatch is easily mixable with the epoxy resin composition or a component thereof and thereby is preventing any air contamination so that environmental health and safety is improved.

The present invention is defined in the claims. The present invention refers to an electrical insulation system with improved electrical breakdown strength, said electrical insulation system comprising a hardened polymer component having incorporated therein a conventional filler material and a selected nano-scale sized filler material, characterized in that
(a) said hardened polymer component is selected from epoxy resin compositions, polyesters, polyamides, polybutylene terephthalate, polyurethanes and polydicyclopentadiene, and preferably is a hardened epoxy resin system;
(b) said conventional filler material is a known filler material having an average grain size distribution within the range of 1 µm-500 µm, being present in a quantity within the range of 40%-65% by weight, calculated to the total weight of the insulator system; and
(c) said nano-scale sized filler material is selected from the group comprising silica, zinc oxide, alumina, aluminum trihydrate (ATH), layered silicates, titanium dioxide, metal nitrides and metal carbides, wherein said nano-scale sized filler material is a pretreated nano-scale material, having been produced by a sol-gel process; wherein said nano-scale sized filler material is present within the electrical insulation system in an amount of about 1%-20% by weight, calculated to the weight of the conventional filler material present in the electrical insulator system.

The present invention further refers to the hardenable electrical insulation composition for the production of the hardened electrical insulation system as defined above, said hardenable electrical insulation composition comprising a hardenable polymer component having incorporated therein a conventional filler material and a selected nano-scale sized filler material, characterized in that
(d) said hardenable polymer component is a monomeric or oligomeric starting material of the respective component (a) being selected from hardenable epoxy resin compositions, hardenable polyesters, polyamides, polybutylene terephthalate, polyurethanes and polydicyclopentadiene, and preferably is a hardenable epoxy resin system;
(e) said conventional filler material is a known filler material as defined herein above as component (b), having an average grain size distribution within the range of 1 µm-500 µm, and being present in a quantity within the range of 40%-65% by weight, calculated to the total weight of the hardenable insulator system; and
(f) said selected nano-scale sized filler material is a filler material as defined herein above as component (c), having been produced by a sol-gel process; and wherein said selected nano-scale sized filler material is present within the hardenable electrical insulation system in an amount of 1%-20% by weight, calculated to the weight of the conventional filler material present in the hardenable electrical insulator system.

The present invention also refers to a mixture containing the conventional filler material defined as component (b) herein above, together with the selected nano-scale sized filler material defined as component (c) herein above, wherein the selected nano-scale sized silica powder is present in an amount of 1%-20% by weight, calculated to the weight of the conventional filler material present.

The present invention also refers to a masterbatch comprising a hardenable polymer component defined as component (d) herein above, and the selected nano-scale sized filler material as the only filler material, as defined as component (c) herein above. The present invention further refers to a method of producing said hardenable electrical insulation composition, which on curing resp. hardening yields the hardened electrical insulation system with improved electrical breakdown strength.

The present invention further refers to electrical articles comprising said electrical insulation system with improved electrical breakdown strength as defined according to the present invention.

The present invention further refers to the selected pretreated nano-scale sized filler material having been produced by a sol-gel process, as defined as component (c) herein above, wherein said pretreated nano-scale sized filler material carries on it surface reactive glycidyl groups, preferably in the form of 3-glycidoxypropylsilyl groups.

The polymer component of the curable electrical insulation composition, yielding the hardened electrical insulation system, may be selected from monomeric and/or oligomeric epoxy resin compositions, monomeric and/or oligomeric polyesters, polyamides, polybutylene terephthalate, polyurethanes and polydicyclopentadiene. Preferably the polymer component of the hardenable electrical insulation composition is a hardenable epoxy resin composition, comprising an epoxy resin component, a hardener component and a curing agent. The expressions "hardened" or "cured", resp. "hardenable" or "curable", are equivalent and applicable for the respective polymer used. Analogously the expressions "cross-linked" or "polymerized" could be used, as is known to the expert in the art.

The conventional filler material [component (b)] preferably has an average grain size distribution within the range of 5 µm-100 µm, preferably within the range of 5 µm-50 µm, preferably within the range of 5 µm-30 µm. Preferably at least 70% of the particles, preferably at least 80% of the particles, have a particle size within the range indicated.

The conventional filler material is preferably selected from silica, quartz, talc, silicates such as mica, kaolin or a layered silicate, aluminum oxide, aluminum trihydrate (ATH), titanium oxide, dolomite [CaMg(CO₃)₂], metal nitrides, such as silicon nitride, boron nitride and aluminium nitride or metal carbides, such as silicon carbide. Mica (glimmer) and kaolin are aluminium silicates substantially composed of SiO₂ and Al₂O₃.

The conventional filler material may be surface treated with a coupling agent known per se. The coupling agent is preferably selected from the group comprising silanes and siloxanes and preferably is a silane, for example 3-glycidoxypropyltrimethoxysilane or 3-glycidoxypropyldimethoxymethylsilane.

The conventional filler material preferably is present within the insulator system in a quantity within the range of 50%-65% by weight, preferably in a quantity of about 55%-60% by weight, calculated to the total weight of the insulator system.

The nano-scale sized filler material used according to the present invention is produced by a sol-gel process and is selected from the group comprising silica, zinc oxide, alumina, aluminum trihydrate (ATH), layered silicates, titanium dioxide, metal nitrides and metal carbides. Preferred are nano-scale sized filler materials selected from the group comprising silica, zinc oxide, alumina, aluminum trihydrate (ATH), layered silicates and titanium dioxide. Further preferred are nano-scale sized filler materials selected from the group comprising silica, zinc oxide, alumina, aluminum trihydrate (ATH) and layered silicates, and preferably selected from the group comprising silica, alumina, aluminum trihydrate (ATH) and layered silicates. Preferred are nano-scale sized filler materials selected from the group comprising silica, alumina and aluminum trihydrate (ATH). Most preferred is nano-scale sized silica.

Nano-scale sized metal nitrides are preferably selected from silicon nitride, boron nitride and aluminum nitride. Nano-scale sized metal carbide is preferably silicon carbide.

The preparation of nano-scale materials is known per se. Such sol-gel process for the production of nano-scale sized silica powder is for example described in WO 2009/015724 A1, the content of which is incorporated herein by reference.

A sol-gel process for the production of nano-scale sized zinc oxide dispersions is for example described in US 6,699,316, the content of which is incorporated herein by reference. A sol-gel process for the production of nano-scale sized alpha-alumina powder is for example described in US 7,638,105, the content of which is incorporated herein by reference. A sol-gel process for the production of nano-scale sized layered silicates is for example described in Chem. Materials, 1991, 3(5), pages 772-775, the content of which is incorporated herein by reference. Such processes may be used analogously to produce the nano-scale filler materials as used according to the present invention. As nano-scale silica is the preferred nano-scale filler material, the contents of WO 2009/015724 A1 is further described in more detail, whereby these details, especially with respect to average grain sizes, surface treatment, filler content of the hardenable electrical insulation composition, and production techniques for making the hardenable electrical insulation composition also apply to and include the other nano-scale filler materials mentioned herein. The expert in the art will know how to apply these techniques.

WO 2009/015724 A1 describes a sol-gel process for the production of a hydrophobic, monodispersed, silicon dioxide, with an average grain size distribution within the nano-scale. The process incorporates the following steps: (a) providing an aqueous suspension of colloidal silicon dioxide with an average grain size within the range of 1 nm to 500 nm; (b) reacting the colloidal silicon dioxide with an organosilane and/or an organosiloxane in an aprotic cyclic ether thereby silanising the colloidal silicon dioxide; (c) separating the aqueous phase of the reaction mixture from the organic phase; (d) adding a further time to the organic phase an organosilane and/or an organosiloxane in an aprotic cyclic ether and silanising the colloidal silicon dioxide; and (e) separating the aqueous phase of the reaction mixture from the organic phase.

The selected nano-scale sized silica powder as described above, is obtained as a dry solid monodispersed powder subsequent to step (e) by eliminating the solvent from the suspension obtained in step (e), e.g. by distilling off the solvent from the suspension under vacuum at elevated temperature. Such dry solid pretreated nano-scale sized silica powder [defined as component (c)] may be used according to the present invention and can be added at any stage during the preparation of the curable electrical insulation composition, either to a single component or to an intermediate mixture of the curable electrical insulation composition.

The filler starting material used for preparing the nano-scale sized filler material in the sol-gel process, such as the colloidal silicon dioxide, used for preparing the nano-scale sized silica powder in the sol-gel process, have an average grain size preferably within the range of 2 nm - 300 nm, preferably within the range of 3 nm - 200 nm, preferably within the range of 4 nm - 150 nm, preferably within the range of 4 nm - 80 nm, and preferably within the range of 10 nm - 40 nm.

Said nano-scale sized filler material as obtained in the sol-gel process, with the preferences as mentioned herein before, is present within the curable electrical insulation composition and the cured electrical insulation system preferably in an amount of about 5%-15% by weight, preferably in an amount of about 8%-12% by weight, and preferably in an amount of about 10% by weight, calculated to the weight of the conventional filler material present in the electrical insulator system.

Preferably the nano-scale sized filler material as obtained in the sol-gel process, with the preferences as mentioned herein before, preferably the nano-scale sized silica powder, is present within the electrical insulation system in an amount of about 3% to 8% by weight, preferably at about 5% by weight, calculated to the total weight of the electrical insulator system.

The organosilane and/or an organosiloxane as used in an aprotic cyclic ether for silanising the colloidal filler material such as the silicon dioxide is a reactive organosilane and/or organosiloxane, preferably a trialkylhalosilane such as trimethylchlorosilane, or a trialkylalkoxysilane such as trimethylmethoxysilane.

Preferably the organosilane in the aprotic cyclic ether, thereby silanising for example the colloidal silicon dioxide, is 3-glycidoxypropyltrimethoxysilane or 3-glycidoxypropyldimethoxymethylsilane. In this way a pretreated nano-scale sized silica powder is obtained which carries on it surface reactive glycidyl groups, such as the 3-glycidoxypropylsilyl groups.

It is possible to make a homogeneous suspension of the selected nano-scale sized filler material in the form of a masterbatch by intensively mixing the dry solid nano-scale sized filler material with a part of the curable electrical insulation composition or with a component thereof, or with a part of a component thereof. Such a masterbatch, containing the nano-scale sized filler material, can be used for adding the nano-scale filler material to the curable electrical insulation composition at any stage of its preparation. Within the scope of the present invention, the nano-scale filler material is preferably used in the form of a master-batch, preferably as a masterbatch wherein the nano-scale filler maerial is dispersed in diglycidylether-bisphenol A (DGEBA-resin) and/or diglycidylether-bisphenol F (DGEBF-resin).

The present invention also refers to a method of producing said masterbatch containing the selected nano-scale sized filler material, characterized in that the hardenable polymer component in the form of a monomeric or an oligomeric starting material of the respective component (a) defined as component (d) herein above, and the selected nano-scale sized filler material defined as component (c) herein above, are thoroughly mixed together in a weight ratio so that the selected nano-scale sized filler material is present in the masterbatch in an amount of 1%-30% by weight, preferably in an amount of 1%-20% by weight, calculated to the total weight of the masterbatch.

The present invention also refers to a method of producing the hardenable electrical insulation composition as defined herein above, said composition comprising a hardenable polymer component in the form of a monomeric or oligomeric starting material of the respective component (a); a conventional filler material as defined herein above as component (b), and the selected nano-scale sized filler material as defined herein above as component (c), characterized in that the components of the electrical insulation composition are mixed together in any desired sequence.

The present invention further refers to a method of producing the hardenable electrical insulation composition as defined herein above, said composition comprising a hardenable polymer component in the form of a monomeric or oligomeric starting material of the respective component (a); a conventional filler material as defined herein above as component (b), and the selected nano-scale sized filler material as defined herein above as component (c), characterized in that the components of the electrical insulation composition are mixed together in any desired sequence, whereby said selected nano-scale sized filler material defined as component (c) is added in the form of a masterbatch at any stage during the production sequence of the electrical insulation composition.

In a further embodiment, the present invention refers to an electrical insulation system with improved electrical breakdown strength, said electrical insulation system comprising a hardened polymer component having incorporated therein a selected nano-scale sized filler material (but not containing a conventional filler material), characterized in that,
- said hardened polymer component is identical with component (a) as defined above; and
- said selected nano-scale sized filler material is identical with component (c) as defined above, wherein said selected nano-scale sized filler material is present within the electrical insulation system in an amount of about 1%-20% by weight, calculated to the total weight of the electrical insulator system.

Correspondingly, the present invention further refers to a hardenable electrical insulation composition for producing an electrical insulation system, said hardenable electrical insulation composition comprising a hardenable polymer component having incorporated therein a selected nano-scale sized filler material (but not containing a conventional filler material), characterized in that,
- said hardenable polymer component is a monomeric or an oligomeric starting material of the respective component (a) as defined above; and
- said selected nano-scale sized filler material is identical with component (c) as defined above, wherein said selected nano-scale sized filler material is present within the electrical insulation system in an amount of about 1%-20% by weight, calculated to the weight of the conventional filler material present in the electrical insulator system.

The present invention also refers to a method of producing a hardenable electrical insulation composition, said hardenable composition comprising a hardenable polymer component in the form of a monomeric or oligomeric starting material of the respective component (a) having incorporated therein a selected nano-scale sized filler material as defined herein above as component (c) (but not containing a conventional filler material), characterized in that the components are mixed together in any desired sequence.

In such an electrical insulation system, which does not contain a conventional filler material, the selected nano-scale sized filler material as defined herein above as component (c) is preferably present in an amount of about 3%-10% by weight, preferably in an amount of 3%-8% by weight, preferably at 5% by weight, calculated to the total weight of the electrical insulator system.

The present invention further refers to electrical articles comprising said electrical insulation system comprising a hardened polymer component defined as component (a) herein above, and the selected nano-scale sized filler material defined as component (c) herein above [excluding the presence of a conventional filler material of component (b)].

The filler component (b) as well as the filler component (c) can be incorporated into the respective monomeric or oligomeric starting material of component (a) analogously to any known manner to be uniformly dispersed therein, as described in the literature for other filler materials. This is within the knowledge of the expert. The non-hardened composition thus obtained, e.g. the non-hardened epoxy resin composition, can for example be processed using conventional vacuum casting and/or automated pressure gelation (APG) manufacturing processes. The dispersion is formed into the desired shape using known methods, optionally with the help of a molding tool, and then hardened out, optionally using post-curing, whereby the electrical insulation system according to the present invention is obtained.

As optional additives the composition may comprise further components selected from wetting/dispersing agents, plasticizers, antioxidants, light absorbers, and from further additives generally used in electrical applications.

Preferred epoxy resins used within the context of the present invention are aromatic and/or cycloaliphatic compounds. These compounds are known per se. Said epoxy resins are reactive glycidyl compounds containing at least two 1,2-epoxy groups per molecule. Preferably a mixture of polyglycidyl compounds is used such as a mixture of diglycidyl- and triglycidyl compounds.

Epoxy compounds useful for the present invention comprise unsubstituted glycidyl groups and/or glycidyl groups substituted with methyl groups. These glycidyl compounds preferably have a molecular weight between 200 and 1200, especially between 200 und 1000 and may be solid or liquid. The epoxy value (equiv./100 g) is preferably at least three, preferably at least four and especially at about five, preferably about 4.9 to 5.1. Preferred are glycidyl compounds which have glycidyl ether- and/or glycidyl ester groups. Such a compound may also contain both kinds of glycidyl groups, e.g. 4-glycidyloxy-benzoic acidglycidyl ester. Such compounds are known. Examples of preferred glycidyl compounds which have glycidyl ether groups are for example optionally substituted epoxy resins of formula (IV): 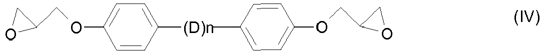
D = -O-, -SO2-, -CO-, -CH2-, -C(CH3)2-, -C(CF3)2-
n = zero or 1
or formula (V):

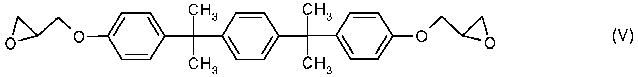

Examples are glycidyl ethers derived from Bisphenol A or Bisphenol F as well as glycidyl ethers derived from Phenol-Novolak-resins or cresol-Novolak-resins.

Cycloaliphatic epoxy resins are for example hexahydro-o-phthalic acid-bis-glycidyl ester, hexahydro-m-phthalic acid-bis-glycidyl - ester or hexahydro-p-phthalic acid-bis-glycidyl ester. Also aliphatic epoxy resins, for example 1,4-butane-diol diglycidylether, may be used as a component for the composition of the present invention.

Preferred within the present invention are also aromatic and/or cycloaliphatic epoxy resins which contain at least one, preferably at least two, aminoglycidyl group in the molecule. Such epoxy resins are known and for example described in WO 99/67315. Preferred compounds are those of formula (VI): 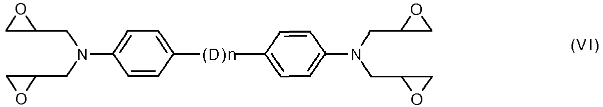
D = -O-, -SO2-, -CO-, -CH2-,-C(CH3)2-, -C(CF3)2-
n = Zero or 1

Especially suitable aminoglycidyl compounds are N,N-diglycidylaniline, N,N-diglycidyltoluidine, N,N,N',N'-tetraglycidyl-1,3-diaminobenzene, N,N,N',N'-tetraglycidyl-1,4-diaminobenzene, N,N,N',N'-tetraglycidylxylylendiamine, N,N,N',N'-tetraglycidyl-4,4'-diaminodiphenylmethane, N,N,N',N'-tetraglycidyl-3,3'-diethyl-4,4'-diaminodiphenylmethane, N,N,N',N'-tetraglycidyl-3,3'-diaminodiphenylsulfone, N,N'-Dimethyl-N,N'-diglycidyl-4,4'-diaminodiphenylmethane, N,N,N',N'-tetraglycidyl-alfa,alfa'-bis(4-aminophenyl)-p-diisopropylbenzene and N,N,N',N'-tetraglycidyl-alfa,alfa'-bis-(3,5-dimethyl-4-aminophenyl)-p-diisopropylbenzene. Preferred aminoglycidyl compounds are also those of formula (VII) : 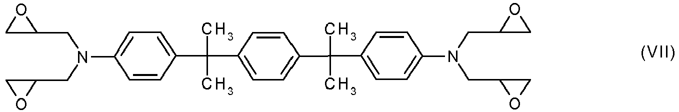 or of formula (VIII):

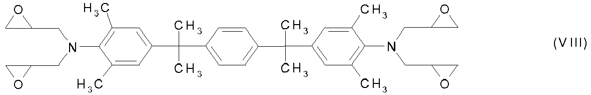

Further aminoglycidyl compounds which can be used according to the present invention are described in e.g. Houben-Weyl, Methoden der Organischen Chemie, Band E20, Makromolekulare Stoffe, Georg Thieme Verlag Stuttgart, 1987, pages 1926-1928.

Hardeners are known to be used in epoxy resins. Hardeners are for example hydroxyl and/or carboxyl containing polymers such as carboxyl terminated polyester and/or carboxyl containing acrylate- and/or methacrylate polymers and/or carboxylic acid anhydrides. Useful hardeners are further cyclic anhydrides of aromatic, aliphatic, cycloaliphatic and heterocyclic polycarbonic acids. Preferred anhydrides of aromatic polycarbonic acids are phthalic acid anhydride and substituted derivates thereof, benzene-1,2,4,5-tetracarbonic acid dianhydride and substituted derivates thereof. Numerous further hardeners are from the literature.

The optional hardener can be used in concentrations within the range of 0.2 to 1.2, equivalents of hardening groups present, e.g. one anhydride group per 1 epoxide equivalent. However, often a concentration within the range of 0.2 to 0.4, equivalents of hardening groups is preferred.

As optional additives the composition may comprise further at least a curing agent (accelerant) for enhancing the polymerization of the epoxy resin with the hardener, at least one wetting/dispersing agent, plasticizers, antioxidants, light absorbers, as well as further additives used in electrical applications.

Curing agents for enhancing the polymerization of the epoxy resin with the hardener are for example tertiary amines, such as benzyldimethylamine or amine-complexes such as complexes of tertiary amines with boron trichloride or boron trifluoride; urea derivatives, such as N-4-chlorophenyl-N',N'-dimethylurea (Monuron); optionally substituted imidazoles such as imidazole or 2-phenyl-imidazole. Preferred are tertiary amines. Other curing catalyst such as transition metal complexes of cobalt (III), copper, manganese, (II), zinc in acetylacetonate may also be used, e.g. cobalt acetylacetonate(III). The amount of catalyst used is a concentration of about 50-1000 ppm by weight, calculated to the composition to be cured.

Wetting/dispersing agents are known per se for example in the form of surface activators; or reactive diluents, preferably epoxy-containing or hydroxyl-containing reactive diluents; thixotropic agents or resinous modifiers. Known reactive diluents for example are cresylglycidylether, diepoxyethyl-1,2-benzene, bisphenol A, bisphenol F and the diglycidylethers thereof, diepoxydes of glycols and of polyglycols, such as neopentylglycol-diglycidylether or trimethylolpropane-diglycidylether. Preferred commercially available wetting/dispersing agents are for example organic copolymers containing acidic groups, e.g. Byk® W-9010 having an acid value of 129 mg KOH/g). Such wetting/dispersing agents are preferably used in amounts of 0.5 % to 1.0 % based on the filler weight.

Plasticizers, antioxidants, light absorbers, as well as further additives used in electrical applications are known in the art and are not critical.

The insulating composition made from epoxy resin is made by mixing all the components, optionally under vacuum, in any desired sequence and curing the mixture by heating. Preferably the hardener and the curing agent are separately added before curing. The curing temperature is preferably within the range of 50°C to 280°C, preferably within the range of 100°C to 200°C. Curing generally is possible also at lower temperatures, whereby at lower temperatures complete curing may last up to several days, depending also on catalyst present and its concentration.

The non-hardened insulating resin composition is preferably applied by using vacuum casting or automated pressure gelation (APG) manufacturing processes, optionally under the application of vacuum, to remove all moisture and air bubbles from the coil and the insulating composition. The composition may then be cured by any method known in the art.

Preferred uses of the insulation produced according to the present invention are electrical insulations, especially in the field of impregnating electrical coils and in the production of electrical components such as transformers, bushings, insulators, switches, sensors, converters and cable end seals.

Preferred uses of the insulation system produced according to the present invention are also high-voltage insulations for indoor and outdoor use, especially for outdoor insulators associated with high-voltage lines, as long-rod, composite and cap-type insulators, and also for base insulators in the medium-voltage sector, in the production of insulators associated with outdoor power switches, measuring transducers, lead-throughs, and overvoltage protectors, in switchgear construction, in power switches, dry-type transformers, and electrical machines, as coating materials for transistors and other semiconductor elements and/or to impregnate electrical components. The following examples illustrate the invention.

### Definition of raw materials:

EPR 845: Bisphenol A/F epoxy, Hexion Specialty Chemicals EPH 845: Modified carboxylic anhydride, Hexion Specialty Chemicals EPC 845: Modified tertiary amine, Hexion Specialty Chemicals Microsilica W12:Silica flower d_{50%} = 16 µm, Quarzwerke GmbH Nanopox E470: Masterbatch of silica 5-50 nm nanoparticles
(40wt% SiO₂) dispersed in DGEBA, Nanoresins AG.

### Compositions

The compositions used are given in Table 1:
Reference 1: unfilled epoxy resin composition,
Reference 2: epoxy resin composition filled with Microsilica W12,
Example 1: epoxy resin composition filled with nanosilica, and
Example 2: epoxy resin composition filled with Microsilica W12 and nanosilica (Nanopox E470).

**Table 1**

| | Ref. 1 epoxy | Example 1 Epoxy + Nanopox E470 | Reference 2 epoxy + Microsilica W12 | Example 2 epoxy + Nanopox E470 + Microsilica W12 |
|---|---|---|---|---|
| EPR 845 | 100 p | 100 p | 100 p | 100 p |
| EPH 845 | 82 p | 96 p | 82 p | 125 p |
| EPC 845 | 1 p | 1 p | 2 p | 3 p |
| Nanopox E470 (with 40% SiO₂) | | 28 p | | 87 p |
| Microsilica W12 | | | 276 p | 385 p |

### Reference 1 (Sample preparation)

All the components are separately preheated at a temperature of 90°C for 2 hours in an oven (Step 1). The components EPH 845 and EPR 845 are mixed together in a mixing apparatus under a vacuum of 0.1 bar and at a temperature of 90°C for 5 minutes (Step 2). Mixing is then continued during 10 minutes at a temperature of 90°C under normal pressure, without the application of vacuum (Step 3). Then, EPC 845 is added and mixing is continued under vacuum for further 5 minutes under normal pressure (Step 4). The oven, still being kept at a temperature of 90°C, is then evacuated to a vacuum of 0.1 bar (Step 5) and kept at this vacuum and at this temperature for about 10 minutes. The curable epoxy resin composition is poured into a mould which has been preheated for about 2 hours at 130°C. The mould is then evacuated to a vacuum of 0.1 bar and kept at a temperature of 140°C for 10 hours to cure the epoxy resin composition.

### Reference 2 (Sample preparation)

The preparation is made analogous to the sample preparation of Reference 1, with the difference that Microsilica W12 is slowly added in Step 3 and the mixture is mixed for further 10 minutes after the addition has been completed.

### Example 1 (Sample preparation)

The preparation is made analogous to the sample preparation of Reference 1, with the difference that Nanopox E470 is added in Step 2 together with the other components EPH 845 and EPR 845 and all the components are mixed together in a mixing apparatus under a vacuum of 0.1 bar and at a temperature of 90°C for five minutes.

### Example 2 (Sample preparation)

The preparation is made analogous to the sample preparation of Reference 2, with the difference that Nanopox E470 is added in Step 2 together with the other components EPH 845 and EPR 845 and the mixture is mixed for further 10 minutes after the addition has been completed.

**Table 2. (Properties of unfilled and microsilica filled epoxy with and without the addition of Nanopox)**

| Test | Properties | Ref. 1 Epoxy | Example 1 Epoxy + Nanopox | Reference 2 Epoxy + microsilica W12 | Example 2 Epoxy + Nanopox + microsilica W12 |
|---|---|---|---|---|---|
| DSC | Tg (°C) | 77 | 79 | 74 | 83 |
| Tensile Strength | E (MPa) | 3260 | 3395 | 9993 | 9571 |
| | std dev. | 128 | 67 | 352 | 268 |
| | σ_{b} (MPa) | 63 | 71 | 84 | 89 |
| | std dev. | 4 | 6 | 3 | 1 |
| | ε_{b}%) | 2.3 | 2.8 | 1.4 | 1.6 |
| | std dev. | 0.3 | 0.8 | 0.2 | 0 |
| Fracture | G_{Ic} (kJ/m2) | 304 | 412 | 557 | 528 |
| | std dev. | 28 | 72 | 35 | 55 |

| | | | | | |
|---|---|---|---|---|---|
| Tg (°C): glass-transission temperature in °C E (MPa): Young's modulus in MPa std dev.: Standard deviation σ_{b} (MPa): Tensile strength in MPa ε_{b}%): Elongation at break in % (percent) G_{Ic} (kJ/m²): Critical energy release rate in kJ/m² | | | | | |

### Example 3

Analogous results are obtained when the nano-scale sized silica as used in Examples 1 and 2 is replaced by a nano-scale sized zinc oxide dispersion as described in US 6,699,316; a nano-scale sized alpha-alumina powder as described in US 7,638,105; or a nano-scale sized layered silicate as described in Chem. Materials, 1991, 3(5), pages 772-775.

### Discussion

In the case of pure epoxy (Reference 1/Example 1), one can see that the addition of Nanopox has several beneficial and simultaneous effects on the resulting properties: increase of Tg, increase of tensile strength and critical energy release rate. Increase of Tg has usually a negative effect on critical energy release rate. Therefore, these results are surprising.

The amount of EPH 845 in Example 1 (compared to Reference 1) was adjusted because in Example 1 Nanopox is added as a masterbatch constituted of silica nanoparticle dissolved in DGEBA resin. In order to maintain the same stoichiometry (in Reference 1 and Example 1), it was necessary to adjust the amount of anhydride hardener.

Comparing the microsilica filled systems (Reference 2/Example 2), one can see that the addition of Nanopox increases significantly the Tg, but also the tensile strength while maintaining good fracture properties. In this case the amount of anhydride has been adjusted to maintain the same stoichiometry and the amount of microsilica was adjusted to maintain the same overall micro/nano silica content.

## Claims

1. Electrical insulation system with improved electrical breakdown strength, said electrical insulation system comprising a hardened polymer component (a) having incorporated therein a first filler material (b) and second filler material being a selected nano-scale sized filler material (c), **characterized in that**
(a) said hardened polymer component is selected from epoxy resin compositions, polyesters, polyamides, polybutylene terephthalate, polyurethanes and polydicyclopentadiene;
(b) said first filler material is a filler material having an average grain size distribution within the range of 1 µm-500 µm, being present in a quantity within the range of 40%-65% by weight, calculated to the total weight of the insulator system; and
(c) said nano-scale sized filler material is selected from the group comprising silica, zinc oxide, alumina, aluminum trihydrate (ATH), layered silicates, titanium dioxide, metal nitrides and metal carbides, wherein said nano-scale sized filler material is a pretreated nano-scale material, having been produced by a sol-gel process; wherein said nano-scale sized filler material is present within the electrical insulation system in an amount of 1%-20% by weight, calculated to the weight of the first filler material present in the electrical insulator system.

2. Electrical insulation system according to claim 1, **characterized in that** the first filler material (b) has an average grain size distribution within the range of 5 µm-100 µm.

3. Electrical insulation system according to claims 1 or 2, **characterized in that** the first filler material (b) is selected from silica; quartz; talc; silicates; metal nitrides or metal carbides.

4. Electrical insulation system according to any one of the claims 1 to 3, **characterized in that** the first filler material (b) has been surface treated with a coupling agent selected from the group comprising silanes and siloxanes.

5. Electrical insulation system according to any one of the claims 1 to 4, **characterized in that** the first filler material (b) is present within the insulator system in a quantity within the range of 50%-65% by weight, calculated to the total weight of the insulator system.

6. Electrical insulation system according to claim 1, **characterized in that** the nano-scale sized metal nitride is selected from silicon nitride, boron nitride and aluminum nitride and the nano-scale sized metal carbide is silicon carbide.

7. Electrical insulation system according to any one of the claims 1 to 6, **characterized in that** the nano-scale sized filler material has an average grain size within the range of 2 nm-300 nm.

8. Electrical insulation system according to any one of the claims 1 to 7, **characterized in that** the nano-scale sized filler material is present within the electrical insulation system in an amount of 3% to 8% by weight, calculated to the total weight of the electrical insulator system.

9. Hardenable electrical insulation composition for the production of a hardened electrical insulation system according to any one of the claims 1 to 8, said hardenable electrical insulation composition comprising a hardenable polymer component having incorporated therein a first filler material and second filler material being a selected nano-scale sized filler material, **characterized in that**
(d) said hardenable polymer component is a monomeric or oligomeric starting material of the respective component (a) being selected from hardenable epoxy resin compositions, hardenable polyesters, polyamides, polybutylene terephthalate, polyurethanes and polydicyclopentadiene;
(e) said first filler material is a known filler material as defined herein above as component (b), having an average grain size distribution within the range of 1 µm-500 µm, and being present in a quantity within the range of 40%-65% by weight, calculated to the total weight of the hardenable insulator system; and
(f) said selected nano-scale sized filler material is a filler material as defined herein above as component (c), having been produced by a sol-gel process; and wherein said selected nano-scale sized silica powder is present within the hardenable electrical insulation system in an amount of 1%-20% by weight, calculated to the weight of the first filler material present in the hardenable electrical insulator system.

10. Hardenable electrical insulation composition according to claim 9, **characterized in that** said pretreated nano-scale sized filler material (c) carries on its surface reactive glycidyl groups in the form of 3-glycidoxypropylsilyl groups.

11. Hardenable electrical insulation composition according to claim 10, **characterized in that** the epoxy resin component has an epoxy value of at least three.

12. Method of producing the hardenable electrical insulation composition according to any one of the claims 9 to 11, **characterized in that** the components of said hardenable electrical insulation composition are mixed together in any desired sequence,
whereby said selected nano-scale sized filler material defined as component (c) is added in the form of a masterbatch at any stage during the production sequence of said hardenable electrical insulation composition,
wherein said masterbatch comprises a hardenable polymer component defined as component (d) in claim 9, and the selected nano-scale sized filler material as the only filler material, defined as component (c) in claim 1.

13. Method according to claim 12, **characterized in that** the nano-scale filler material is dispersed in diglycidylether-bisphenol A (DGEBA) and/or diglycidylether-bisphenol F (DGEBF) in a weight ratio so that the selected nano-scale sized silica powder is present in the masterbatch in an amount of 1%-30% by weight, calculated to the total weight of the masterbatch.

14. Electrical articles comprising the electrical insulation system according to any one of the claims 1 to 8.

15. Electrical insulation system according to any one of the claims 1 to 8, in the form of outdoor insulators associated with high-voltage lines, as long-rods, as composite and cap-type insulators, as base insulator in the medium-voltage sector, as insulator associated with outdoor power switches, measuring transducers, lead-throughs, and overvoltage protectors, in switchgear construction, in power switches, dry-type transformers, and electrical machines, as coating materials for transistors and other semiconductor elements and/or to impregnate electrical components.

## Patentansprüche

1. Elektrisches Isolierungssystem mit verbesserter elektrischer Durchschlagsfestigkeit, wobei das elektrische Isolierungssystem eine ausgehärtete Polymerkomponente (a) umfasst, in die ein erster Füllstoff (b) und ein zweiter Füllstoff, der ein ausgewählter nanoskaliger Füllstoff (c) ist, aufgenommen ist, **dadurch gekennzeichnet, dass**
(a) die ausgehärtete Polymerkomponente ausgewählt ist aus Epoxidharzzusammensetzungen, Polyestern, Polyamiden, Polybutylenterephthalat, Polyurethanen und Polydicyclopentadien;
(b) der erste Füllstoff ein Füllstoff mit einer Verteilung der mittleren Korngröße innerhalb des Bereichs von 1 µm bis 500 µm ist, der in einer Menge im Bereich von 40 Gewichts-% bis 65 Gewichts-% vorliegt, berechnet auf das Gesamtgewicht des Isolatorsystems;
und
(c) der nanoskalige Füllstoff aus der Gruppe ausgewählt ist, die Siliziumdioxid, Zinkoxid, Aluminiumoxid, Aluminiumtrihydrat (ATH), Schichtsilikate, Titandioxid, Metallnitride und Metallcarbide umfasst, wobei der nanoskalige Füllstoff ein vorbehandeltes nanoskaliges Material ist, das mit einem Sol-Gel-Verfahren hergestellt wurde; wobei der nanoskalige Füllstoff in dem elektrischen Isolierungssystem in einer Menge von 1 Gewichts-% bis 20 Gewichts-% vorliegt, berechnet auf das Gewicht des in dem elektrischen Isolatorsystem vorhandenen ersten Füllstoffs.

2. Elektrisches Isolierungssystem nach Anspruch 1, **dadurch gekennzeichnet, dass** der erste Füllstoff (b) eine Verteilung der mittleren Korngröße innerhalb des Bereichs von 5 µm bis 100 µm aufweist.

3. Elektrisches Isolierungssystem nach Anspruch 1 oder 2, **dadurch gekennzeichnet, dass** der erste Füllstoff (b) ausgewählt ist aus Siliziumdioxid; Quarz; Talk; Silikaten; Metallnitriden oder Metallcarbiden.

4. Elektrisches Isolierungssystem nach einem der Ansprüche 1 bis 3, **dadurch gekennzeichnet, dass** der erste Füllstoff (b) mit einem Kopplungsmittel oberflächenbehandelt wurde, das aus der Gruppe ausgewählt ist, die Silane und Siloxane umfasst.

5. Elektrisches Isolierungssystem nach einem der Ansprüche 1 bis 4, **dadurch gekennzeichnet, dass** der erste Füllstoff (b) in dem Isolatorsystem in einer Menge im Bereich von 50 Gewichts-% bis 65 Gewichts-% vorliegt, berechnet auf das Gesamtgewicht des Isolatorsystems.

6. Elektrisches Isolierungssystem nach Anspruch 1, **dadurch gekennzeichnet, dass** das nanoskalige Metallnitrid ausgewählt ist aus Siliziumnitrid, Bornitrid und Aluminiumnitrid und das nanoskalige Metallcarbid Siliziumcarbid ist.

7. Elektrisches Isolierungssystem nach einem der Ansprüche 1 bis 6, **dadurch gekennzeichnet, dass** der nanoskalige Füllstoff eine mittlere Korngröße innerhalb des Bereichs von 2 nm bis 300 nm aufweist.

8. Elektrisches Isolierungssystem nach einem der Ansprüche 1 bis 7, **dadurch gekennzeichnet, dass** der nanoskalige Füllstoff in dem elektrischen Isolierungssystem in einer Menge von 3 Gewichts-% bis 8 Gewichts-% vorliegt, berechnet auf das Gesamtgewicht des elektrischen Isolatorsystems.

9. Aushärtbare elektrische Isolierungszusammensetzung für die Herstellung eines ausgehärteten elektrischen Isolierungssystems nach einem der Ansprüche 1 bis 8, wobei die aushärtbare elektrische Isolierungszusammensetzung eine aushärtbare Polymerkomponente umfasst, in die ein erster Füllstoff und ein zweiter Füllstoff, der ein ausgewählter nanoskaliger Füllstoff ist, aufgenommen ist, **dadurch gekennzeichnet, dass**
(d) die aushärtbare Polymerkomponente ein monomeres oder oligomeres Ausgangsmaterial der jeweiligen Komponente (a) ist, die aus aushärtbaren Epoxidharzzusammensetzungen, aushärtbaren Polyestern, Polyamiden, Polybutylenterephthalat, Polyurethanen und Polydicyclopentadien ausgewählt ist;
(e) der erste Füllstoff ein wie vorliegend zuvor als Komponente (b) definierter bekannter Füllstoff ist, der eine Verteilung der mittleren Korngröße innerhalb des Bereichs von 1 µm bis 500 µm aufweist und in einer Menge im Bereich von 40 Gewichts-% bis 65 Gewichts-% vorliegt, berechnet auf das Gesamtgewicht des aushärtbaren Isolatorsystems; und
(f) der ausgewählte nanoskalige Füllstoff ein wie vorliegend zuvor als Komponente (c) definierter Füllstoff ist, der mit einem Sol-Gel-Verfahren hergestellt wurde; und wobei das ausgewählte nanoskalige Siliziumdioxidpulver in dem aushärtbaren elektrischen Isolierungssystem in einer Menge von 1 Gewichts-% bis 20 Gewichts-% vorliegt, berechnet auf das Gewicht des in dem aushärtbaren elektrischen Isolatorsystem vorhandenen ersten Füllstoffs.

10. Aushärtbare elektrische Isolierungszusammensetzung nach Anspruch 9, **dadurch gekennzeichnet, dass** der vorbehandelte nanoskalige Füllstoff (c) auf seiner Oberfläche reaktive Glycidylgruppen in der Form von 3-Glycidoxypropylsilylgruppen trägt.

11. Aushärtbare elektrische Isolierungszusammensetzung nach Anspruch 10, **dadurch gekennzeichnet, dass** die Epoxidharzkomponente einen Epoxidwert von mindestens drei aufweist.

12. Verfahren zur Herstellung der aushärtbaren elektrischen Isolierungszusammensetzung nach einem der Ansprüche 9 bis 11, **dadurch gekennzeichnet, dass** die Komponenten der aushärtbaren elektrischen Isolierungszusammensetzung in jeder beliebigen Reihenfolge miteinander vermischt werden,
wodurch der als Komponente (c) definierte ausgewählte nanoskalige Füllstoff in jedem beliebigen Stadium während des Produktionsablaufs für die aushärtbare elektrische Isolierungszusammensetzung in Form eines Masterbatchs zugegeben wird,
wobei das Masterbatch eine in Anspruch 9 als Komponente (d) definierte aushärtbare Polymerkomponente und als einzigen Füllstoff den in Anspruch 1 als Komponente (c) definierten ausgewählten nanoskaligen Füllstoff umfasst.

13. Verfahren nach Anspruch 12, **dadurch gekennzeichnet, dass** der nanoskalige Füllstoff in Bisphenol-A-diglycidylether (DGEBA) und/oder Bisphenol-F-Diglycidylether (DGEBF) in einem Gewichtsverhältnis dispergiert ist, dass das ausgewählte nanoskalige Siliziumdioxidpulver in dem Masterbatch in einer Menge von 1 Gewichts-% bis 30 Gewichts-% vorliegt, berechnet auf das Gesamtgewicht des Masterbatchs.

14. Elektroartikel, die das elektrische Isolierungssystem nach einem der Ansprüche 1 bis 8 umfassen.

15. Elektrisches Isolierungssystem nach einem der Ansprüche 1 bis 8 in Form von Isolatoren für den Freilufteinsatz in Verbindung mit Hochspannungsleitungen, als Langstabisolatoren, als Verbund- und Kappenisolatoren, als Fußpunktisolator im Mittelspannungsbereich, als Isolator in Verbindung mit Leistungsschaltern für den Freilufteinsatz, Messwandlern, Durchführungen und Überspannungsschutzen, im Schaltanlagenbau, in Leistungsschaltern, Trockentransformatoren und elektrischen Maschinen, als Beschichtungswerkstoffe für Transistoren und andere Halbleiterbauelemente und/oder zur Imprägnierung von elektrischen Bauteilen.

## Revendications

1. Système d'isolation électrique à résistance au claquage électrique améliorée, ledit système d'isolation électrique comprenant un composant polymère durci (a) dans lequel sont incorporées une première matière de charge (b) et une seconde matière de charge qui est une matière de charge de dimension nanométrique choisie (c), **caractérisé en ce que**
(a) ledit composant polymère durci est choisi parmi des compositions de résine époxy, des polyesters, des polyamides, du poly(téréphtalate de butylène), des polyuréthanes et du polydicyclopentadiène ;
(b) ladite première matière de charge est une matière de charge ayant une distribution de la taille moyenne des grains dans la plage de 1 µm-500 µm, qui est présente en une quantité dans la plage de 40 %-65 % en poids, calculée par rapport au poids total du système isolant ; et
(c) ladite matière de charge de dimension nanométrique est choisie dans le groupe comprenant la silice, l'oxyde de zinc, l'alumine, le trihydroxyde d'aluminium (ATH), les phyllosilicates, le dioxyde de titane, les nitrures métalliques et les carbures métalliques, ladite matière de charge de dimension nanométrique étant une matière nanométrique prétraitée, ayant été produite par un processus sol-gel ; ladite matière de charge de dimension nanométrique étant présente dans le système d'isolation électrique en une quantité de 1 %-20 % en poids, calculée par rapport au poids de la première matière de charge présente dans le système isolant électrique.

2. Système d'isolation électrique selon la revendication 1, **caractérisé en ce que** la première matière de charge (b) a une distribution de la taille moyenne des grains dans la plage de 5 µm-100 µm.

3. Système d'isolation électrique selon les revendications 1 ou 2, **caractérisé en ce que** la première matière de charge (b) est choisie parmi la silice ; le quartz ; le talc ; des silicates ; des nitrures métalliques ou des carbures métalliques.

4. Système d'isolation électrique selon l'une quelconque des revendications 1 à 3, **caractérisé en ce que** la première matière de charge (b) a été traitée en surface avec un agent de couplage choisi dans le groupe comprenant les silanes et les siloxanes.

5. Système d'isolation électrique selon l'une quelconque des revendications 1 à 4, **caractérisé en ce que** la première matière de charge (b) est présente dans le système isolant en une quantité dans la plage de 50 %-65 % en poids, calculée par rapport au poids total du système isolant.

6. Système d'isolation électrique selon la revendication 1, **caractérisé en ce que** le nitrure métallique de dimension nanométrique est choisi parmi le nitrure de silicium, le nitrure de bore et le nitrure d'aluminium et le carbure métallique de dimension nanométrique est le carbure de silicium.

7. Système d'isolation électrique selon l'une quelconque des revendications 1 à 6, **caractérisé en ce que** la matière de charge de dimension nanométrique a une taille moyenne des grains dans la plage de 2 nm-300 nm.

8. Système d'isolation électrique selon l'une quelconque des revendications 1 à 7, **caractérisé en ce que** la matière de charge de dimension nanométrique est présente dans le système d'isolation électrique en une quantité de 3 % à 8 % en poids, calculée par rapport au poids total du système isolant électrique.

9. Composition d'isolation électrique durcissable pour la production d'un système d'isolation électrique durci selon l'une quelconque des revendications 1 à 8, ladite composition d'isolation électrique durcissable comprenant un composant polymère durcissable dans lequel sont incorporées une première matière de charge et une seconde matière de charge qui est une matière de charge de dimension nanométrique choisie, **caractérisée en ce que**
(d) ledit composant polymère durcissable est une matière de départ monomère ou oligomère du composant (a) respectif qui est choisie parmi des compositions de résine époxy durcissables, des polyesters durcissables, des polyamides, du poly(téréphtalate de butylène), des polyuréthanes et du polydicyclopentadiène ;
(e) ladite première matière de charge est une matière de charge connue telle que définie ci-dessus en tant que composant (b), ayant une distribution de la taille moyenne des grains dans la plage de 1 µm-500 µm et qui est présente en une quantité dans la plage de 40 %-65 % en poids, calculée par rapport au poids total du système isolant durcissable ; et
(f) ladite matière de charge de dimension nanométrique choisie est une matière de charge telle que définie ci-dessus en tant que composant (c), ayant été produite par un processus sol-gel ; et ladite poudre de silice de dimension nanométrique choisie étant présente dans le système d'isolation électrique durcissable en une quantité de 1 %-20 % en poids, calculée par rapport au poids de la première matière de charge présente dans le système isolant électrique durcissable.

10. Composition d'isolation électrique durcissable selon la revendication 9, **caractérisée en ce que** ladite matière de charge de dimension nanométrique prétraitée (c) porte sur sa surface des groupes glycidyle réactifs sous la forme de groupes 3-glycidoxypropylsilyle.

11. Composition d'isolation électrique durcissable selon la revendication 10, **caractérisée en ce que** le composant résine époxy a un indice d'époxy d'au moins trois.

12. Procédé de production de la composition d'isolation électrique durcissable selon l'une quelconque des revendications 9 à 11, **caractérisé en ce que** les composants de ladite composition d'isolation électrique durcissable sont mélangés les uns avec les autres dans n'importe quel ordre souhaité, ladite matière de charge de dimension nanométrique choisie définie en tant que composant (c) étant ajoutée sous la forme d'un mélange maître à n'importe quel stade pendant la séquence de production de ladite composition d'isolation électrique durcissable,
dans lequel ledit mélange maître comprend un composant polymère durcissable défini en tant que composant (d) dans la revendication 9 et la matière de charge de dimension nanométrique choisie définie en tant que composant (c) dans la revendication 1 en tant qu'unique matière de charge.

13. Procédé selon la revendication 12, **caractérisé en ce que** la matière de charge de dimension nanométrique est dispersée dans de l'éther diglycidylique de bisphénol A (DGEBA) et/ou de l'éther diglycidylique de bisphénol F (DGEBF) en un rapport pondéral pour que la poudre de silice de dimension nanométrique choisie soit présente dans le mélange maître en une quantité de 1 %-30 % en poids, calculée par rapport au poids total du mélange maître.

14. Articles électriques comprenant le système d'isolation électrique selon l'une quelconque des revendications 1 à 8.

15. Système d'isolation électrique selon l'une quelconque des revendications 1 à 8, sous la forme d'isolants d'extérieur associés à des lignes à haute tension, en tant qu'isolateurs à long fût, en tant qu'isolateurs de type composite et à enveloppe, en tant qu'isolant de base dans le secteur de la moyenne tension, en tant qu'isolant associé à des interrupteurs d'extérieur, des transducteurs de mesure, des traversées et des dispositifs de protection contre les surtensions, dans la construction d'appareillages de commutation, dans des interrupteurs, des transformateurs de type sec et des machines électriques, en tant que matières de revêtement pour des transistors et d'autres éléments à semiconducteur et/ou pour imprégner des composants électriques.
